# EUROPEAN PATENT SPECIFICATION

(11) **EP 2 080 005 B1**
(45) Date of publication and mention of the grant of the patent: **23.01.2013**
(21) Application number: 07804931.9
(22) Date of filing: 14.09.2007
(51) Int. Cl.: G01N 15/08

(54) **METHOD AND DEVICE FOR MEASURING THE GAS PERMEABILITY THROUGH FILMS AND WALLS OF CONTAINERS**
VERFAHREN UND VORRICHTUNG ZUR MESSUNG DER GASDURCHLÄSSIGKEIT VON FOLIEN UND WÄNDEN VON BEHÄLTERN
PROCÉDÉ ET DISPOSITIF POUR MESURER LA PERMÉABILITÉ AU GAZ À TRAVERS DES COUCHES ET DES PAROIS DE CONTENANTS

(30) Priority: 19.09.2006 IT PI20060108
(43) Date of publication of application: 22.07.2009
(73) Proprietor: Extrasolution S.r.l., 56124 Pisa (IT)
(72) Inventor: PIOMBINI, Alessandro, 57036 Porto Azzurro (IT); LUCCHESI, Mauro, 55100 Lucca (IT)
(74) Representative: Gritschneder, Martin
(86) International application number: PCT/IB2007/002675
(87) International publication number: WO 2008/035159

(56) References cited:
- US-A- 3 604 246
- US-A- 4 112 739
- US-A- 4 391 128
- US-A- 4 656 865
- US-A1- 2002 162 384
- R.W. BALLUFFI, S.M. ALLEN, W.C. CARTER: "Kinetics of materials" 30 December 2005 (2005-12-30), JOHN WILEY & SONS , HOBOKEN, NEW JERSAY, USA , XP002468865 page 99 - page 103

## Description

### Field of the invention

The present invention relates to a sensing device of the permeability of a gas through the walls of containers, in general containers for industrial products, for example plastic film containers for food, chemical, pharmaceutical, electronic products, etc.

### Description of the prior art

For preserving products, in particular food in a container, a plastic bag or a thin sheet/film wrapper, it is desirable to minimize the gas migration through the walls of the container. This way it is possible to protect the organoleptic properties of the products by preserving the gaseous mixture created inside the packaging of the products. To preserve the composition of this mixture with time it is necessary that the wrapper blocks or limits any gas migration, not only through possible closure parts or welding zones, but also through the walls of the container same.

A similar need is felt for other products, such as chemical and pharmaceutical products, electronic and optoelectronic devices and other articles that can be altered if in contact with the gaseous atmosphere present in the environment.

For determining the permeability of a film that can be used to make such containers a permeated gas flow through said film is measured. Systems are known adapted to carry out a gas flow measurement through a thin film or a wall. One of these is described in DE4142064 and comprises a measurement cell consisting of two shells facing at opposite sides with respect to a thin film sample whose permeability has to be determined; the thin film sample is placed between such shells, where such shells are sealed against the sample in order to create two chambers tightly separated by the film sample. Both chambers have an inlet and an outlet for a gas or a mixture of gas so that the gases flow in such chambers and they get in contact with opposite sides of the above described film. Owing to the permeability of the film, an amount of gas permeates from a chamber to the other so that for measuring the permeability of the film it is enough to measure the concentration of the permeated gas that reaches a sensor conveyed by a gaseous carrier whose flow rate is known. This permeability, which is given by the product of a diffusion coefficient and of a solubility coefficient typical for the specific material of the film, determined by known systems, is evaluated as the increasing with time concentration of the permeated gas into the gaseous carrier, up to reaching an asymptote parallel to the time axis of a concentration/time chart, corresponding to the stabilization of the flow permeating through the film after convergence.

The above described known systems, however, have the drawback that they provide a very slow increasing of concentration with time, that gives a rather long stabilization and then measurement time. In addition if the permeability features of different films have to be compared, the measurement time is very long.

Another drawback of the known systems is that they provide very low intensity output signals, especially for analysis of low permeability films, thus increasing the measurement time up to obtaining a signal that is intense enough to be detected by common sensors.

Patent documents US 2002/162384 A1 and US 4656865 A disclose a method and device for measuring the permeability of a gas sample through a thin film, where the thin film is placed between a first and said second chamber in a sealed way. A sample gas is flown through the first chamber and a carrier gas is flown in the second chamber. The fraction of the gas sample permeated into the second chamber and present in the flow of the carrier gas exiting from said second chamber is measured. Document US 2002/162384 A1 discloses to maintain approximately equal pressures in the two chambers in order to prevent distortion of the thin film. The system disclosed in Document US 4656865 A is capable of separately controlling the pressure in each of the chambers.

### Summary of the invention

In the following description, permeability to a gas of a film or a wall is the flow of the permeated gas through the film or wall in steady conditions.

It is, therefore, an object of the present invention to provide a method and a device for measuring the permeability of a gas through a fraction of a thin film or of a wall that overcomes the above described drawbacks.

A particular object of the present invention is to provide a method and a device adapted to carry out a measurement of permeability of a gas through a film, in a way quicker with respect to the known systems.

Another feature of the invention is to provide a method and a device adapted to carry out a measurement of permeability of a gas through a film, capable of amplifying the detected permeability signal with respect to the known systems.

These and other objects are achieved by a method for measuring the permeability of a gas sample through a thin film or a wall, comprising the steps of:
- arranging said thin film or wall as a membrane between a first and said second chamber in a sealed way, said membrane separating said first and second chamber;
- causing said gas sample to flow into said first chamber and causing a gaseous carrier to flow into said second chamber, an amount of said gas sample permeating in said second chamber through said membrane and being conveyed away by said gaseous carrier;
- measuring the amount of said gas sample permeated into said second chamber and present in the flow of said gaseous carrier exiting from said second chamber;
characterised in that said steps of causing said gas sample and said gaseous carrier to flow are made at a total pressure, of said gas sample and gaseous carrier in said first and second chamber, being of a predetermined value substantially larger than the pressure of the environment, the total pressure difference between said first and second chamber remaining substantially equal to zero.

In other words, even if the film is balanced having a same pressure in the first and second chamber, the partial pressure of the gas permeating from one chamber to the other is increased, in order to control as desired the flow thereof through the membrane.

Said predetermined value of the total gas pressure is set between 2 and 15 bar and preferably between 3 and 7 bar.

In a further step said total gas pressure in said first and second chamber is reduced to a value lower than said predetermined value.

In particular, said lower value is selected from the group comprised of:
a value lower than said first predetermined value but higher than the atmospheric pressure;
a value substantially equal to the atmospheric pressure.

According to the invention, by causing the gas sample and the gaseous carrier to flow with a pressure higher than atmospheric pressure, the total pressure in the first chamber is always substantially equal to the total pressure of the second chamber, so that the permeated gas flow is higher than the one of the prior art. This way, since the amount of permeated gas versus time is higher, a quicker transient phase is obtained if a consequent variation of permeated flow is considered. Furthermore, since the amount of permeated gas is higher, it is possible to use sensors that in general are less sensitive and then cheaper.

In particular, said step of reducing the total pressure is obtained as desired by means of:
- an automatic feedback control capable of working on the gas concentration and the total pressure in said first and second chamber,
- a scheduled variation of the total pressures of said first and second chamber.

Advantageously, a cleaning step of said first and second chamber and of said membrane are provided, obtaining a controlled flow of gaseous carrier through said first and second chamber, the total pressure difference between said first and second chamber being kept substantially equal to zero, said total pressure being increased up to a predetermined washing value preferably larger than the pressure of the environment.

According to another aspect of the invention, the above described objects are also fulfilled by a device for measuring the permeability of a gas through a membrane of thin film or a wall, comprising:
- a first and a second chamber having respectively a first and a second opening operatively facing each other and arranged at opposite sides with respect to said membrane, said first and second opening being seal coupled with the external surfaces of said membrane, said first and second chamber having at least one respective inlet and a respective outlet, in said first chamber a gas sample flowing and in said second chamber a gaseous carrier flowing, a fraction of said gas sample permeating in said second chamber and flowing with said gaseous carrier towards said outlet of said second chamber;
- means for measuring and adjusting the flow in said first and second chamber;
- means for measuring the concentration of the gas exiting from said second chamber;
characterised in that means are provided for measuring and adjusting the pressure in said first and second chamber adapted to increase the total pressure of said gas sample and gaseous carrier in said first and second chamber at a predetermined value substantially larger than the pressure of the environment, the total pressure difference between said first and second chamber remaining substantially equal to zero.

Said means for measuring and adjusting the pressure are adapted also to reduce said total pressure in said first and second chamber up to a further total pressure predetermined value, not higher than said predetermined value.

The device according to the invention is then capable of carrying out the method as above described, causing the total pressures of the gas in the first chamber and in the second chamber to increase their value beyond a predetermined value, ensuring however that the membrane arranged as separators of the two chambers is subject to same pressures on both its surfaces, and then is not forced to deformation. Advantageously, said device comprises an automatic control unit, adapted to control said means for adjusting the flows of said gas sample and gaseous carrier and said means for adjusting the total pressure of the gas in said first chamber and in said second chamber, in order to bring said total pressure beyond a predetermined value and so that said total pressure in said first chamber remains substantially equal to the total pressure in said second chamber.

Advantageously, said first chamber is obtained in a first hollow object and said second chamber is obtained in a second hollow body, said second hollow body creating a base and said first hollow object creating a cover operatively engageable with said base, said membrane being arranged between said base and said cover.

In particular, said cover is operatively pressed on said base by means of stopping means preferably selected from the group comprised of:
at least one bracket;
at least one screw;
a screw threaded surface between said cover and said base;
a fixed joint;
at least one element for engaging said cover to said base, coupled pivotally for rotation or coupled slidingly with respect to said base.

In particular, said first and second chamber, obtained in said first and second hollow body, have cylindrical shape, preferably determined by milling.

Advantageously, said means for measuring and adjusting the total pressure of the gas in said first and second chamber are arranged upstream from said first and second chamber.

In a preferred embodiment, said means for adjusting the flow are arranged downstream of said first and second chamber.

Advantageously, said means for measuring the concentration of the gas exiting from said second chamber are arranged downstream of said second chamber.

Advantageously, said device comprises means for adding humidity to said gas sample as inlet to said first chamber.

In particular, said means for adding humidity comprise:
- an outer reservoir containing a liquid comprising water, said reservoir having an inlet and an outlet for a flow of said gas sample through said reservoir;
- at least one inlet duct arranged upstream from said reservoir and exiting into said inlet and at least one delivery duct arranged downstream of said reservoir, said delivery duct exiting into said first chamber.

In particular, said inlet duct of said reservoir comprises a valve adapted to switch the flow of said gas sample between said inlet duct of said reservoir and said inlet of said first chamber. This way it is possible to have in parallel two inputs for gas sample, one for a dry gas or a gas in normal conditions and one for humidified gas that crosses the reservoir and exits from said first chamber. By combining the fraction of dry gas and humidified gas the desired humidity is obtained.

Advantageously, said device comprises means for measuring the humidity of said gas sample, said means being preferably arranged downstream of said outlet of said first chamber.

In particular, said gas sample, which is adapted to permeate in part from said first to said second chamber through said membrane is selected from the group comprised of:
- oxygen;
- carbon dioxide.

In particular, said gaseous carrier, adapted to carry said gas sample permeated into said second chamber towards said outlet of said second chamber, is selected from the group comprised of:
nitrogen;
hydrogen;
helium;
a mixture of said gases.

### Brief description of the drawings

The invention will be made clearer with the following description of some embodiments, exemplifying but not limitative, with reference to the attached drawings wherein:
Figure 1 shows a schematic view of a device according to the invention having a measurement cell for measuring gas permeability through a thin film;
Figure 2 shows an exploded view of a measuring device capable of carrying out the method according to the invention;
Figure 3 shows a cross sectional view of a portion of such a measuring device;
Figure 4 shows a comparative chart of the trendof gas permeability with time between the known devices and the device according to the invention where the permeability measurement is carried out at a high pressure;
Figure 5 shows a comparative chart of the trend of permeability obtained with the known systems with respect to the trend obtained with the present invention, where after a first measuring step at a high pressure, the pressure is reduced to a value close to atmospheric pressure;
Figure 6 shows a comparative chart of the trend of permeability obtained with the known systems with respect to the trend obtained with the present invention, wherein, after a first measuring step at a high pressure, the pressure is reduced partially up to a value in any case larger than atmospheric pressure;
Figure 7 shows a chart that describes the variation with time of the concentration in the thickness of the film according to the traditional technique;
Figure 8 shows a further chart that describes the variation with time of the concentration in the thickness of the film according to the present invention.

### Description of the preferred embodiments

In the following description an example will be illustrated of a method according to the invention, for measuring the permeability of a gas sample through a membrane of thin film or a wall, for example of containers of food products, of drugs and in general for all the products that, for a correct preservation, need to be preserved under vacuum or in the presence of a predetermined mixture of gas. In such cases it is necessary to know the gas permeability of the film wall of the container.

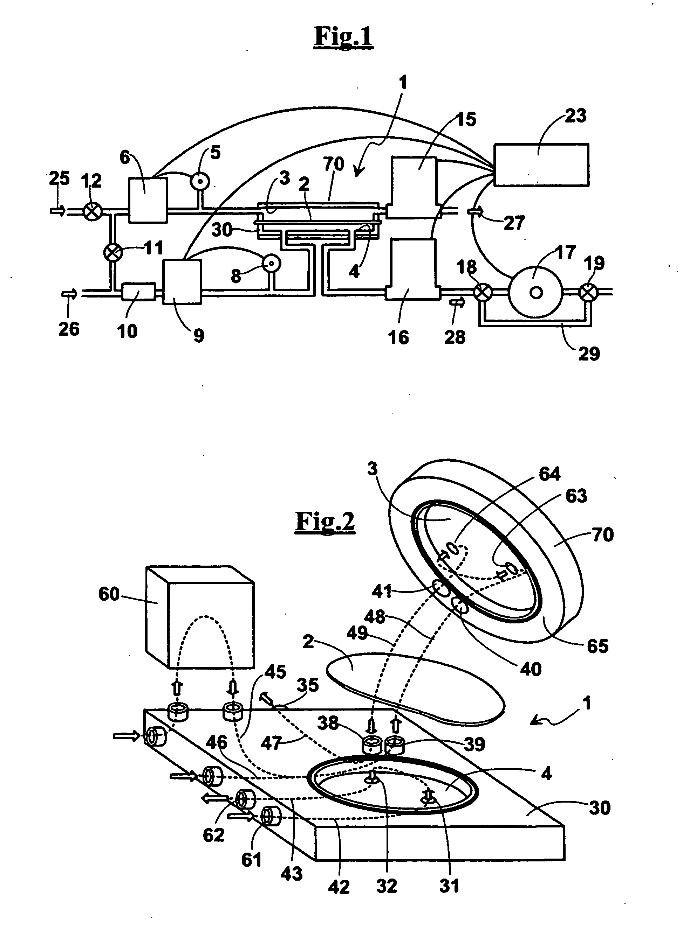

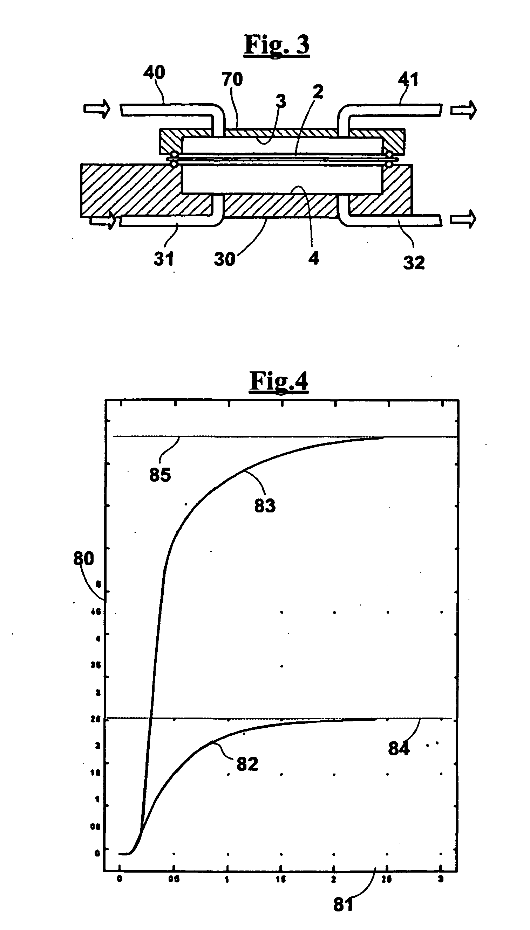

Such method is obtained with a device shown in figure 1, comprising a measurement cell 1 of known type, consisting of a first hollow object 70 or cover and a second hollow body or body of base 30, in each of which is determined a milled circular chamber, respectively denominated first chamber or chamber of the cover 3 and second chamber or chamber of base 4. Closing the cover 70 on the body of base 30 with the interposing of the membrane 2, the two chambers are separated from the membrane, which is of a thin material whose gas permeability is to be measured, for example the permeability of a packaging material to oxygen. Each of the two chambers 3 and 4, as shown in figure 3, has a respective inlet and an outlet for the flow of the gas. In particular, the first chamber 3 has an inlet 40 and an outlet 41 for a flow 25 of a gas sample, for example oxygen, of which is to be measured the permeability through the membrane 2, whereas the second chamber 4 has an inlet 31, through which is inserted a flow 26 of gaseous carrier, for example nitrogen, adapted to match the total pressure of the first chamber for not stressing the membrane 2, and adapted to carry, towards the outlet 32, the amount of gas sample permeated into the chamber 4 through the membrane 2 during the measurements, normally a flow 28 of nitrogen and oxygen. In figure 1, upstream each inlet of the measurement cell 1, the device according to the invention comprises respectively a pressure regulator 6 and 9 associated with a respective pressure sensor 5 and 8. For adding humidity to the flow 26 of the entering gaseous carrier an humidifier, not shown in figure 1 but indicated with 60 in figure 2, can be provided arranged on the flow itself, comprising a reservoir of water out of the body of base. The humidifier, not shown, is preferably located immediately before the inlet of the gas in the cell on the upper line and, if necessary, on the not shown lower line too. Furthermore, can be provided a catalyst 10 for capturing and eliminating the possible traces of oxygen present on the inlet line of the gaseous carrier.

The device comprises the sealing valves 11 and 12 adapted to switch the flows of gas between an introductory cleaning step and an actual measurement step. In fact in the introductory cleaning step a gaseous carrier, for example nitrogen, is caused to flow in both the chambers 3 and 4, and in this case only the valve 11 is open. Differently, during the actual measurement step, the valve 11 is closed and the valve 12 is open in order to obtain two different flows of gas sample and gaseous carrier.

Moreover, each gas flow is adjusted at its exit by means of a respective flow regulator 15 and 16. The exiting flow 28 is analysed by a sensor 17 specific for the permeated gas to be analysed. The valves 18 and 19, with the duct 29, allow excluding the sensor 17 from the flow of exiting gas 28, by commuting the gas flow towards the duct 29.

A control unit 23, preferably of electronic type, operates the regulators of pressure 6 and 9 and of flow 15 and 18 in order to keep the total pressure in the first and in the second chamber always equal, both during the step of cleaning and during the measurement step, in order to avoid the membrane 2 to bend or to be subject to excessive mechanical stress, by using the measurement of the pressure made by the pressure sensors 5 and 8. Furthermore, this control unit 23 is capable of recording the concentration of the gas sample, read by the sensor 17, permeated into the gaseous carrier through the film, supplying an output value that represents the permeability of the membrane 2. Such a system, thus, remarkably increases the partial pressure of the gas sample, for example oxygen, permeated into the second chamber 4 wherein the gaseous carrier flows, even if maintaining equal to zero the total pressure difference between the two chambers 3 and 4. In particular, carrying the total pressures beyond this predetermined value is obtained a higher permeation of the gas sample in the second chamber than the known systems, obtaining a higher concentration of the gas sample and then a much easier and reliable measurements, as well as time of stabilization and measure definitely lower with respect to those obtained with the known systems.

Figure 2 shows a possible exemplary embodiment of a device according to the invention, as already described above. Comprises a hollow body of base 30, a hollow body or cover 70, means for adding humidity to the flow of a gaseous carrier, a plurality of ducts for moving the gas. The chamber 4 in the body of base 30 has a hole inlet 31, adapted to move a gaseous carrier (nitrogen), and a hole outlet 32 of the gaseous carrier and moreover the gas that has been able to cross the membrane, normally nitrogen plus oxygen. The holes 31 and 32 of the chamber of the body of base 30, communicate with relative inlet ducts 61 and of exhaust 62 of the gas made in the body of base 30, along the dashed lines indicated as 42 and 43, in the inlet duct 61 passing N2 and in the discharge duct 62 exiting N2 + 02.

The cover 70 has a flange 65 that is superposed to the body of base 30. The chamber of the cover 3 has inlet holes 63 and outlet 64 of the gas of which is to be measuring the permeability through the membrane 2, communicating with relative inlet and outlet ducts made in the cover 70 leading to the holes 40 and 41 at the flange 65, which meet the respective fittings 39 and 38 on the base body 30 and communicating with relative further inlet ducts 46 and exhaust 47 that cross the base body 30, adapted to be crossed by N2 or 02.

For adding humidity to the inlet gas to the chamber 3 of the cover is provided a reservoir of water 60 out of the base body 30 and communicating with a duct 45 that goes in the inlet duct 46. It is therefore possible, having in parallel two inputs for N2 or 02, one for a dry gas or in normal conditions, and the other for the humidified gas that crosses the reservoir of water 60, falls within base body 30 and rejoins in the inlet duct 46. Combining the fraction of dry and wet gases it is possible to obtain the desired humidity. A humidity sensor is provided, located near the outlet channel 35.

The base body 30 is crossed by two ducts respectively inlet 42 and exhaust 43 of the gas in the chamber of base 30, and two ducts respectively inlet 48 and exhaust 49 of the gas in the chamber 3 of the cover.

It is possible then from one hand to put the gas sample in the chamber 3 of the cover and let it out from it, following the path 48 and 49, giving to the gas a desired controlled pressure, for example atmospheric pressure and a determined humidity. Furthermore, on the other hand, it is possible to flow in the chamber 4 in the body of base a neutral gaseous carrier, for example nitrogen, at atmospheric or controlled pressure. The gaseous carrier, following the path 42 and 43, drags with itself the fraction of sample gas (oxygen) that is permeated into the chamber of base 4 coming from the chamber of the cover 3 through the membrane 2. A detector of gas, not shown, downstream of the duct 43 is capable of giving the desired data of permeability.

Instrument, not shown, controls the flows of gas as inlet and in outlet to provide data amounts of permeability of the membrane to the many gas sample permeated into the second chamber.

A device according to the invention, described in figures 1 and 2 and 3, carries out the method according to the invention. This method can comprise a first "cleaning" step of the membrane 2, during which the regulators of flow 15 and 16 let flow an amount controlled of gaseous carrier, typically nitrogen, in both the chambers 3 and 4, at controlled pressure. This way, possible amount of gas incorporated at first in the thickness of the membrane 2, are extracted from the same membrane 2 and transported to the outlet of the gaseous carrier. The first cleaning step is followed by a measurement wherein a controlled amount of gas test is flowed in the chamber of the cover 3, whereas at the outlet of the chamber of base 4 the effects of the permeation are recorded. This step of measurement is done by carrying the total pressure value, in both the chambers 3 and 4, above a predetermined value, increasing thus the permeation of gas test in the base chamber 4 and therefore its partial pressure, allowing a measure more accurate, but especially much quicker with respect to the known systems. After a predetermined time, then after that the permeation has started, the total pressures in the two chambers 3 and 4 can be again reduced to come back to the standard conditions (1 bar) or attesting to a highest value. The reduction of the pressure can be carried out both acting with a feedback control on the signal produced by the permeated gas or on the pressure, and by a scheduled variation of the pressure.

In figure 4 is shown the trend of the permeability with time, then on the axis of the ordinates 80 is shown the permeability, whereas on the axis of the abscissas 81 is shown the time. In particular, the graphical 82 represents the curve obtained from the techniques known, whereas the graphical 83 represents the curve of the permeability obtained with the present method. In particular, in figure 4, the trend 83 is obtained carrying out the measure with a high value of total pressure, in the first and second chamber, for example a pressure equal to triple of the pressure maximum used in the prior art. as is visible in the graphical, the permeability determined assume a larger values respect to those of the prior art and tends to an horizontal asymptote 85. This technics can be useful in case of film with low permeability.

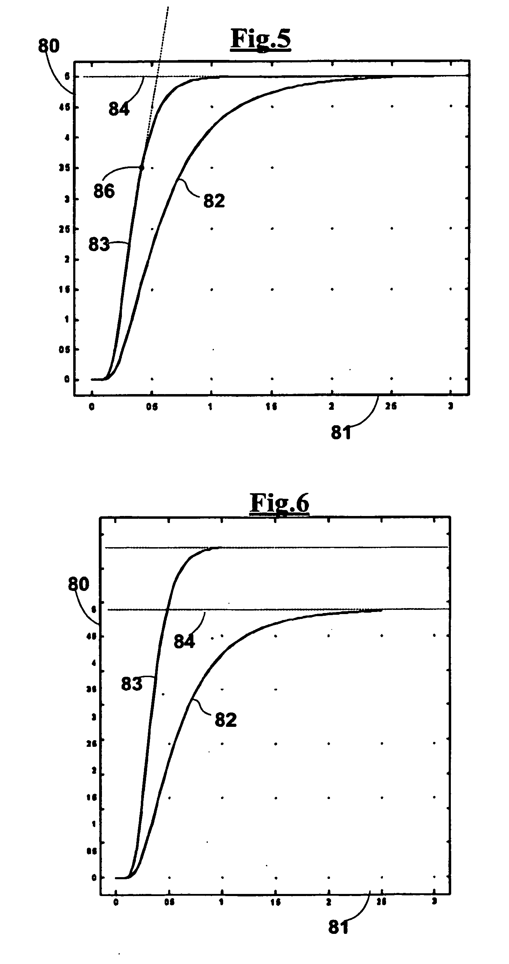

Normally, if the film has to be used for preserving of products to atmospheric pressure, is requires to carry out the measurement the permeability to a value of pressure close to atmospheric pressure. In this case, the method according to the invention requires a step of reducing the pressure up to a value close to atmospheric pressure and produce a trend of the permeability as described in figure 5 where the curve 82 represents the trend obtained with the known systems, whereas the curve 83 represents the trend obtained with the present invention. This curve 83 is obtained with a starting step increasing the pressure to a high value and reducing then to atmospheric pressure starting from the point 86. This method allows to obtain a trend 83 of the permeability having a fraction increasing much more steep of that 82 obtained with the prior art, even if carrying out the measure to pressure close to atmospheric pressure, and then in conditions standard, after a transient phase starting at a high pressure. Then we obtain a quicker stabilization of the permeability measurement in a shorter time before achieving this stabilization with the known systems.

Figure 6 shows a further trend 83 of the permeability obtained with the method according to the invention, wherein after a transient phase starting at a high pressure, this pressure is reduced to a further value of pressure less than that of figure 4 but higher than the atmospheric pressure is observed, thus, a permeability more than of figure 5.

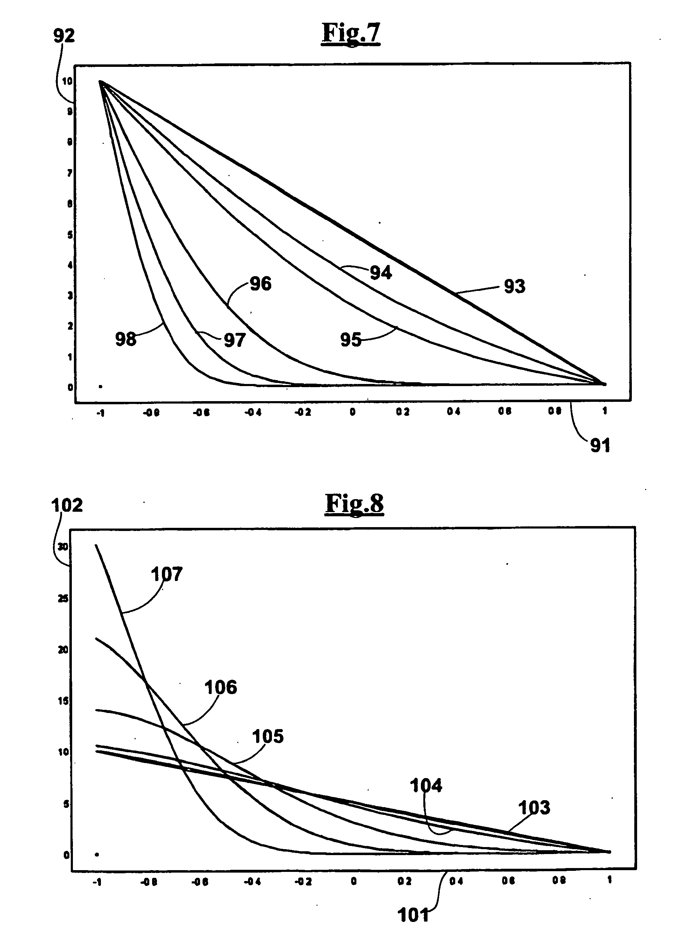

Figure 7 shows the evolution time of the concentration in the thickness of the film, obtained with a method known, whereas figure 8 shows the corresponding evolution time obtained with the method according to the invention. Such graphs have in ordinate (92 or 102) the concentration of gas in the film and in abscissas (91 or 101) the position of detection along the thickness of the film referred to the middle plane and expressed in fractions of the semi-thickness. The curved figures 7 and 8 are parametrized with respect to the time in both cases. In particular, in figure 7, the curved 98 corresponds to a time of 0.04 hours, the curved 97 to a time of 0.1 hours, the curved 96 to a time of 0.2 hours, the curved 95 to 0.4 hours, the curved 94 to 0.6 hours and the curved 93 to 2.0 hours.

Instead, in figure 8, the curved 107 corresponds to a time of 0.04 hours, the curved 106 to 0.1 hours, the curved 105 to 0.2 hours, the curved 104 to 0.4 hours, the curved 103 to 0.6 hours.

## Claims

1. A method for measuring the permeability of a gas sample through a thin film or a wall, comprising the steps of:
- arranging said thin film or wall as a membrane (2) between a first chamber (3) and a second chamber (4) in a sealed way, said membrane (2) separating and sealing said first chamber (3) and said second chamber (4);
- causing said gas sample to flow into and out of said first chamber (3) and causing a carrier gas to flow into and out of said second chamber (4), whereby an amount of said gas sample permeates into said second chamber (4) through said membrane (2) over a period of time and is conveyed away from said second chamber (4) by said carrier gas;
the total pressure of said gas sample and said carrier gas in said first (3) and second chamber (4) being higher than ambient pressure;
the total pressure difference between said first (3) and second chamber (4) being substantially equal to zero;
- determining a rate at which said gas sample permeated into said second chamber (4) and was present in the flow of said carrier gas exiting from said second chamber (4);
**characterized in that** said total pressure is set between 2 and 15 bar and preferably between 3 and 7 bar and that before determining said rate said total pressure in said first chamber (3) and said second chamber (4) is reduced to a lower value.

2. A method, according to claim 1, wherein said lower value is :
- a value less than said first predetermined value but higher than the atmospheric pressure; or
- a value substantially equal to the atmospheric pressure.

3. A method, according to claim 1, whereby said step of reducing the total pressure is obtained by:
- controlling the total pressure in said first chamber (3) and the total pressure in said second chamber (4) with a feedback automatic control system based on the concentration of the gas sample present in the flow of carrier gas exiting from
said second chamber; or
- a scheduled variation of the total pressures of said first (3) second (4) chambers.

4. A method, according to claim 1, further comprising the step of cleaning of said first chamber, said second chamber and said membrane, by passing a controlled flow of carrier gas through said first chamber and second chamber, whereby the total pressure difference between said first and second chamber is kept substantially equal to zero, and said total pressure has been increased up to a predetermined washing value that is higher than ambient pressure.

5. A device for measuring the permeability of a gas through a membrane (2) of thin film or a wall, comprising:
- a first chamber (3) and a second chamber (4) having respectively a first opening and a second opening operatively facing to each other and arranged at opposite sides of a membrane (2), said first and second opening being sealingly coupled with the external surfaces of said membrane (2), said first and second chamber (4) having at least one respective inlet (40,31) and one respective outlet (41,32), in said first chamber a gas sample flowing and in said second chamber (4) a carrier gas flowing, a fraction of said gas sample permeating through the membrane (2) into the second chamber (4) and flowing with said carrier gas towards said outlet (32) of said second chamber (4);
- means for measuring and adjusting the flow of gas in said first (3) and said second chamber (4);
- means for measuring the concentration of the gas exiting from said second chamber (4);
- means for measuring and adjusting the pressure in said first (3) and second chamber (4);
- a controller for controlling the means for measuring and adjusting the pressure in said first (3) and second chamber (4) and for recording the concentration measured by the means for measuring the concentration of the gas exiting from said second chamber (4),
**characterised in that** said controller is adapted to perform the method according to claim 1

6. A device, according to claim 5, wherein said first chamber (3) is obtained in a first hollow object (70) and said second chambers (4) obtained in a second hollow body, (30) said second hollow body (30) creating a base and said first hollow object (70) creating a cover operatively engageable with said base, said membrane being arranged between said base and said cover.

7. A device, according to claim 5, wherein said cover is operatively pressed on said base by :
- at least one bracket;
- at least one screw;
- a screw threaded surface between said cover and said base;
- a fixed joint; or
- at least one element of engaging said cover to said base, coupled pivotally for rotation or slidingly with respect to said base.

8. A device, according to claim 5, wherein said means for measuring and adjusting the total pressure of the gas in said first chamber and said second chamber is arranged upstream from said first chamber (3) and said second chamber (4).

9. A device, according to claim 5, wherein said means for measuring and adjusting the flow is arranged downstream of said first chamber (3) and said second chamber (4).

10. A device, according to claim 5, wherein said means for measuring the concentration of the gas exiting from said second chambel (4) are arranged downstream of said second chamber (4).

11. A device, according to claim 5, further comprising means for adding humidity to said gas sample, said means comprising:
- an outer reservoir (60) containing a liquid comprising water and having an inlet and an outlet that allows for a flow of said gas sample through said reservoir;
- at least one inlet duct arranged upstream from said reservoir and exiting into said inlet and
- at least one delivery duct (45) arranged downstream of said reservoir, whereby said delivery duct exits into said first chamber (3).
said means being preferably arranged downstream of said outlet of said first chamber.

12. The method according to claim 1 or the device according to claim 5, wherein said gas sample is:
oxygen; or
carbon dioxide.

13. The method according to claim 1, wherein said carrier gas consists essentially of:
- nitrogen;
- hydrogen
- helium; or
- a mixture of said gases

## Patentansprüche

1. Verfahren zur Messung der Durchlässigkeit einer dünnen Folie oder einer Wand für eine Gasprobe, umfassend die Schritte:
- Anordnen der dünnen Folie oder Wand als eine Membran (2) zwischen einer ersten (3) und einer zweiten Kammer (4) auf eine gedichtete Art und Weise, wobei die Membran (2) die erste Kammer (3) und die zweite Kammer (4) trennt und abdichtet;
- Bewirken, dass die Gasprobe in die und aus der ersten Kammer (3) strömt, und Bewirken, dass ein Trägergas in die und aus der zweiten Kammer (4) strömt, wodurch eine Menge der Gasprobe während einer Zeitspanne durch die Membran (2) in die zweite Kammer (4) permeiert und aus der zweiten Kammer (4) durch das Trägergas wegtransportiert wird;
wobei der Gesamtdruck der Gasprobe und des Trägergases in der ersten (3) und zweiten Kammer (4) höher als Umgebungsdruck ist;
wobei der Gesamtdruckunterschied zwischen der ersten (3) und zweiten Kammer (4) im Wesentlichen gleich Null ist;
- Bestimmen einer Rate, mit der die Gasprobe in die zweite Kammer (4) permeierte und im aus der zweiten Kammer (4) austretenden Strom des Trägergases vorhanden war;
**dadurch gekennzeichnet, dass** der Gesamtdruck zwischen 2 und 15 Bar und vorzugsweise zwischen 3 und 7 Bar eingestellt wird und dass, bevor die Rate bestimmt wird, der Gesamtdruck in der ersten Kammer (3) und der zweiten Kammer (4) auf einen niedrigeren Wert reduziert wird.

2. Verfahren nach Anspruch 1, bei dem der niedrigere Wert ist:
- ein Wert, der kleiner als der erste vorbestimmte Wert aber höher als der Atmosphärendruck ist; oder
- ein Wert, der im Wesentlichen gleich dem Atmosphärendruck ist.

3. Verfahren nach Anspruch 1, durch das der Schritt einer Reduktion des Gesamtdrucks erhalten wird durch:
- Steuern des Gesamtdrucks in der ersten Kammer (3) und des Gesamtdrucks in der zweiten Kammer (4) mit einem automatischen rückgekoppelten Regelungssystem auf Grundlage der Konzentration der Gasprobe, die in dem aus der zweiten Kammer austretenden Trägergasstrom vorhanden ist; oder
- eine planmäßige Variation der Gesamtdrücke der ersten (3) und zweiten (4) Kammer.

4. Verfahren nach Anspruch 1, weiter umfassend den Schritt einer Reinigung der ersten Kammer, der zweiten Kammer und der Membran, indem ein gesteuerter Trägergasstrom durch die erste Kammer und die zweite Kammer hindurchgeschickt wird, wodurch der Gesamtdruckunterschied zwischen der ersten und zweiten Kammer im Wesentlichen gleich Null gehalten wird und der Gesamtdruck bis zu einem vorbestimmten Spülwert, der höher als Umgebungsdruck ist, erhöht worden ist.

5. Vorrichtung zur Messung der Durchlässigkeit einer Membran (2) aus dünner Folie oder einer Wand für ein Gas, umfassend:
- eine erste Kammer (3) und eine zweite Kammer (4) mit jeweils einer ersten Öffnung und einer zweiten Öffnung, die auf eine funktionsbereite Weise einander zugekehrt sind und auf entgegengesetzten Seiten einer Membran (2) angeordnet sind, wobei die erste und zweite Öffnung mit den äußeren Oberflächen der Membran (2) dichtend gekoppelt sind, die erste und zweite Kammer (4) mindestens einen jeweiligen Einlass (40, 31) und einen jeweiligen Auslass (41, 32) aufweisen, in der ersten Kammer eine Gasprobe strömt und in der zweiten Kammer (4) ein Trägergas strömt, ein Bruchteil der Gasprobe durch die Membran (2) in die zweite Kammer (4) permeiert und mit dem Trägergas in Richtung auf den Auslass (32) der zweiten Kammer (4) strömt;
- eine Einrichtung zur Messung und Einstellung des Gasstroms in der ersten (3) und der zweiten Kammer (4);
- Einrichtungen zur Messung der Konzentration des aus der zweiten Kammer (4) austretenden Gases;
- eine Einrichtung zur Messung und Einstellung des Drucks in der ersten (3) und der zweiten Kammer (4);
- eine Steuereinrichtung zum Steuern der Einrichtung zur Messung und Einstellung des Drucks in der ersten (3) und zweiten Kammer (4) und zur Aufzeichnung der Konzentration, die durch die Einrichtungen zur Messung der Konzentration des aus der zweiten Kammer (4) austretenden Gases gemessen wird, **dadurch gekennzeichnet, dass** die Steuereinrichtung angepasst ist, um das Verfahren nach Anspruch 1 durchzuführen.

6. Vorrichtung nach Anspruch 5, bei der die erste Kammer (3) in einem ersten Hohlgegenstand (70) erhalten wird und die zweite Kammer (4) in einem zweiten Hohlkörper (30) erhalten wird, wobei der zweite Hohlkörper (30) eine Basis erzeugt und der erste Hohlgegenstand (70) eine Abdeckung erzeugt, die sich mit der Basis in Wirkeingriff bringen lässt, wobei die Membran zwischen der Basis und der Abdeckung angeordnet ist.

7. Vorrichtung nach Anspruch 5, bei der die Abdeckung funktionsbereit auf die Basis gepresst ist durch:
- mindestens eine Klammer;
- mindestens eine Schraube;
- eine Schraubgewindefläche zwischen der Abdeckung und der Basis;
- eine feste Verbindung; oder
- mindestens ein Element einer Ineingriffnahme der Abdeckung mit der Basis, das in Bezug zur Basis drehbar gelagert oder verschiebbar gekoppelt ist.

8. Vorrichtung nach Anspruch 5, bei der die Einrichtung zur Messung und Einstellung des Gesamtdrucks des Gases in der ersten Kammer und der zweiten Kammer stromaufwärts von der ersten Kammer (3) und der zweiten Kammer (4) angeordnet ist.

9. Vorrichtung nach Anspruch 5, bei der die Einrichtung zur Messung und Einstellung des Stroms stromabwärts von der ersten Kammer (3) und der zweiten Kammer (4) angeordnet ist.

10. Vorrichtung nach Anspruch 5, bei der die Einrichtungen zur Messung der Konzentration des aus der zweiten Kammer (4) austretenden Gases stromabwärts von der zweiten Kammer (4) angeordnet sind.

11. Vorrichtung nach Anspruch 5, weiter umfassend Einrichtungen zum Zusetzen von Feuchtigkeit zu der Gasprobe, wobei die Einrichtungen umfassen:
- ein äußeres Reservoir (60), das eine Wasser umfassende Flüssigkeit enthält und einen Einlass und einen Auslass aufweist, der einen Strom der Gasprobe durch das Reservoir ermöglicht;
- mindestens einen Einlasskanal, der stromaufwärts von dem Reservoir angeordnet ist und in den Einlass mündet und
- mindestens einen Abgabekanal (45), der stromabwärts von dem Reservoir angeordnet ist, wodurch der Abgabekanal in die erste Kammer (3) mündet, wobei die Einrichtungen vorzugsweise stromabwärts von dem Auslass der ersten Kammer angeordnet sind.

12. Verfahren nach Anspruch 1 oder Vorrichtung nach Anspruch 5, wobei die Gasprobe ist:
Sauerstoff; oder
Kohlendioxid.

13. Verfahren nach Anspruch 1, bei dem sich das Trägergas im Wesentlichen zusammensetzt aus:
- Stickstoff;
- Wasserstoff;
- Helium; oder
- einer Mischung der Gase.

## Revendications

1. Procédé de mesure de la perméabilité d'un échantillon de gaz à travers une couche mince ou une paroi, comprenant les étapes consistant à :
- disposer ladite couche mince ou paroi en tant que membrane (2) entre une première chambre (3) et une seconde chambre (4) d'une manière scellée, ladite membrane (2) séparant et scellant ladite première chambre (3) et ladite seconde chambre (4) ;
- amener ledit échantillon de gaz à s'écouler dans ladite première chambre (3) et hors de celle-ci et amener un gaz porteur à s'écouler dans ladite seconde chambre (4) et hors de celle-ci, de telle sorte qu'une quantité dudit échantillon de gaz pénètre dans ladite seconde chambre (4) au travers de ladite membrane (2) durant une période de temps et soit évacuée de ladite seconde chambre (4) par ledit gaz porteur ;
la pression totale dudit échantillon de gaz et dudit gaz porteur dans lesdites première (3) et seconde (4) chambres étant supérieure à la pression ambiante ;
la différence de pression totale entre lesdites première (3) et seconde (4) chambres étant sensiblement égale à zéro,
- déterminer un taux auquel ledit échantillon de gaz a pénétré dans ladite seconde chambre (4) et était présent dans le flux dudit gaz porteur sortant de ladite seconde chambre (4);
**caractérisé en ce que** ladite pression totale est réglée entre 2 et 15 bars et de préférence entre 3 et 7 bars et qu'avant de déterminer ladite taux ladite pression totale dans ladite première chambre (3) et ladite seconde chambre (4) est réduite à une valeur inférieure.

2. Procédé selon la revendication 1, dans lequel ladite valeur inférieure est :
- une valeur inférieure à ladite première valeur prédéterminée mais supérieure à la pression atmosphérique ; ou
- une valeur sensiblement égale à la pression atmosphérique.

3. Procédé selon la revendication 1, dans lequel ladite étape de réduction de la pression totale est obtenue en :
- régulant la pression totale dans ladite première chambre (3) et la pression totale dans ladite seconde chambre (4) avec un système de régulation automatique par rétroaction en fonction de la concentration de l'échantillon de gaz présent dans le flux de gaz porteur sortant de ladite seconde chambre ; ou
- faisant varier de façon programmée les pressions totales desdites première (3) et seconde (4) chambres.

4. Procédé selon la revendication 1, comprenant en outre l'étape de nettoyage de ladite première chambre, de ladite seconde chambre et de ladite membrane, en passant un flux régulé de gaz porteur à travers ladite première chambre et ladite seconde chambre, de telle sorte que la différence de pression totale entre ladite première et ladite seconde chambre soit maintenue sensiblement à zéro, et que ladite pression totale augmente jusqu'à une valeur de lavage prédéterminée supérieure à la pression ambiante.

5. Dispositif de mesure de la perméabilité d'un gaz à travers une membrane (2) de couche mince ou une paroi, comprenant :
- une première chambre (3) et une seconde chambre (4) ayant respectivement une première ouverture et une seconde ouverture se faisant face opérationnellement et agencées sur des côtés opposés d'une membrane (2), lesdites première et seconde ouvertures étant couplées de manière scellée avec les surfaces externes de ladite membrane (2), lesdites première et seconde (4) chambres ayant au moins une entrée respective (40, 31) et une sortie respective (41, 32), un échantillon de gaz s'écoulant dans ladite première chambre et un gaz porteur s'écoulant dans ladite seconde chambre (4), une fraction dudit échantillon de gaz pénétrant à travers la membrane (2) dans ladite seconde chambre (4) et s'écoulant avec ledit gaz porteur vers ladite sortie (32) de ladite seconde chambre (4) ;
- un moyen de mesure et de réglage du flux de gaz dans lesdites première (3) et seconde (4) chambres ;
- des moyens de mesure de la concentration du gaz sortant de ladite seconde chambre (4) ;
- un moyen de mesure et de réglage de la pression dans lesdites première (3) et seconde (4) chambres ;
- une unité de commande pour commander le moyen de mesure et de réglage de la pression dans lesdites première (3) et seconde (4) chambres et pour enregistrer la concentration mesurée par le moyen de mesure de la concentration du gaz sortant de ladite seconde chambre (4),
**caractérisé en ce que** ladite unité de commande est adaptée pour exécuter le procédé selon la revendication 1.

6. Dispositif, selon la revendication 5, dans lequel ladite première chambre (3) est obtenue dans un premier objet creux (70) et ladite seconde chambre (4) est obtenue dans un second corps creux (30), ledit second corps creux (30) créant une base et ledit premier objet creux (70) créant un couvercle engageable opérationnellement avec ladite base, ladite membrane étant agencée entre ladite base et ledit couvercle.

7. Dispositif, selon la revendication 5, dans lequel ledit couvercle est pressé opérationnellement sur ladite base par :
- au moins une applique ;
- au moins une vis ;
- une surface à filetage de vis entre ledit couvercle et ladite base;
- une articulation fixe ; et
- au moins un élément d'engagement dudit couvercle avec ladite base, couplé avec faculté de pivotement pour tourner ou coulisser relativement à ladite base.

8. Dispositif, selon la revendication 5, dans lequel ledit moyen de mesure et réglage de la pression totale du gaz dans ladite première chambre et ladite seconde chambre est disposé en amont de ladite première chambre (3) et ladite seconde chambre (4).

9. Dispositif, selon la revendication 5, dans lequel ledit moyen de mesure et réglage du flux est agencé en aval de ladite première chambre (3) et de ladite seconde chambre (4).

10. Dispositif, selon la revendication 5, dans lequel lesdits moyens de mesure de la concentration de gaz sortant de ladite seconde chambre (4) sont agencés en aval de ladite seconde chambre (4).

11. Dispositif, selon la revendication 5, comprenant en outre un moyen pour humidifier ledit échantillon de gaz, ledit moyen comprenant :
- un réservoir externe (60) contenant un liquide comprenant de l'eau et ayant une entrée et une sortie qui permet l'écoulement dudit échantillon de gaz à travers ledit réservoir ;
- au moins un conduit d'admission agencé en amont dudit réservoir et débouchant dans ladite entrée et
- au moins un conduit d'échappement (45) agencé en aval dudit réservoir, ledit conduit d'échappement sortant dans ladite première chambre (3),
ledit moyen étant de préférence agencé en aval de ladite sortie de ladite première chambre.

12. Procédé selon la revendication 1 ou le dispositif selon la revendication 5, dans lequel ledit échantillon de gaz est:
de l'oxygène; ou
du dioxyde de carbone.

13. Procédé selon la revendication 1, dans lequel ledit gaz porteur consiste essentiellement en :
- azote;
- hydrogène;
- hélium; ou
- un mélange de ces gaz.
